# EUROPÄISCHE PATENTSCHRIFT

(11) **EP 1 736 341 B1**
(45) Veröffentlichungstag und Bekanntmachung des Hinweises auf die Patenterteilung: **24.08.2011**
(21) Anmeldenummer: 06012913.7
(22) Anmeldetag: 23.06.2006
(51) Int. Cl.: B60J 7/20

(54) **Cabriolet-Fahrzeug mit einem in einem Verdeckablageraum ablegbaren Verdeck**
Convertible with a roof storable in a storage compartment
Cabriolet avec un toit capable d'être gardé dans un compartiment de toit

(30) Priorität: 24.06.2005 DE 102005029725
(43) Veröffentlichungstag der Anmeldung: 27.12.2006
(73) Patentinhaber: Wilhelm Karmann GmbH, 49084 Osnabrück (DE)
(72) Erfinder: Thönelt, Ralf, 49143 Bissendorf (DE)
(74) Vertreter: Kronthaler, Schmidt & Coll.

(56) Entgegenhaltungen:
- EP-A2- 1 078 798
- DE-A1- 10 108 338
- DE-A1- 10 138 669
- DE-C1- 19 957 174

## Beschreibung

Die Erfindung betrifft ein Cabriolet-Fahrzeug mit einem in einem Verdeckablageraum ablegbaren Verdeck.

Im Oberbegriff des Anspruchs 1 wird von einem Cabiolet-Fahrzeug gemäß der EP 1 078 798 A2 ausgegangen. Bei diesem Cabriolet-Fahrzeug erfolgen die Verschwenkung des Schwenkteils und des Klappenteils unabhängig voneinander manuell, wobei zusätzliche, manuell lösbare Rasteinrichtungen zum Verrasten der genannten Bauteile in wenigstens jeweils einer der Endstellungen vorgesehen sind, die manuell entriegelbar sind.

Aus der DE 199 57 174 C1 ist eine Antriebsvorrichtung für eine Trennvorrichtung, die einen gesamten Bereich eines Verdeckkastens von dem gesamten Bereich eines Kofferraums abtrennt, bekannt. Die Trennvorrichtung ist im Querschnitt U-förmig mit zwei Schenkeln ausgebildet, die starr ausgeführt sind und starr mit der Trennvorrichtung verbunden sind. Ein Motor, der sich oberhalb der Trennvorrichtung befindet, hebt die Trennvorrichtung an bzw. senkt diese ab. Die Bewegung erfolgt dabei senkrecht zu einem Kofferraumboden und mit den Schenkeln bzw. Seitenwänden der Trennvorrichtung entlang von Radkästen.

Der Erfindung liegt die Aufgabe zugrunde, ein gattungsgemäßes Cabriolet-Fahrzeug dahingehend weiterzuentwickeln, dass das Öffnen und das Schließen des Verdecks einfach ist.

Diese Aufgabe wird mit einem Cabriolet-Fahrzeug gemäß dem Anspruch 1 gelöst.

Erfindungsgemäß ist eine Antriebsvorrichtung vorgesehen, so dass sowohl das Schwenkteil als auch das Klappenteil in einfacher Weise, bevorzugt automatisiert, schwenkbar sind, so dass die Verstellung der Trennvorrichtung zwischen der Verdeckaufnahmestellung, in der der durch die Trennvorrichtung vom Gepäckraum abgegrenzte Verdeckablageraum maximal ist, und der Gepäckaufnahmestellung, in der der Verdeckablageraum praktisch kein Volumen mehr hat und der Gepäckraum maximal ist, ohne umständliche Manipulationen möglich ist. Bevorzugt ist für das Verschwenken sowohl des Schwenkteils als auch des Klappenteils eine einzige Antriebsvorrichtung, beispielsweise ein elektrischer Aktor, vorgesehen.

Die Unteransprüche sind auf vorteilhafte Ausführungsformen und Weiterbildungen des erfindungsgemäßen Cabriolet-Fahrzeugs gerichtet.

Die Erfindung wird im Folgenden anhand schematischer Zeichnungen beispielsweise und mit weiteren Einzelheiten erläutert.

In den Figuren stellen dar:
- Fig. 1: eine schematische Teilschnittansicht durch einen Teil eines hinteren Bereiches eines Cabriolet-Fahrzeugs mit in Verdeckaufnahmestellung befindlicher Trennvorrichtung,
- Fig. 2: eine Ansicht entsprechend der Fig. 1 mit in Gepäckaufnahmestellung befindlicher Trennvorrichtung,
- Fig. 3: eine schematische Ansicht einer Antriebsvorrichtung,
- Fig. 4: eine der Fig. 1 entsprechende perspektivische Ansicht und
- Fig. 5: eine der Fig. 2 entsprechende perspektivische Ansicht.

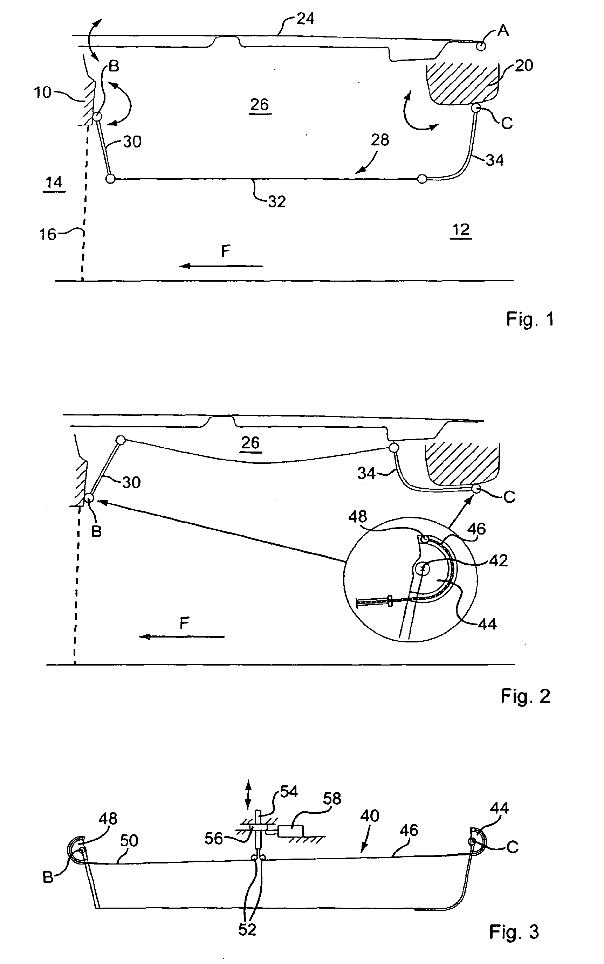

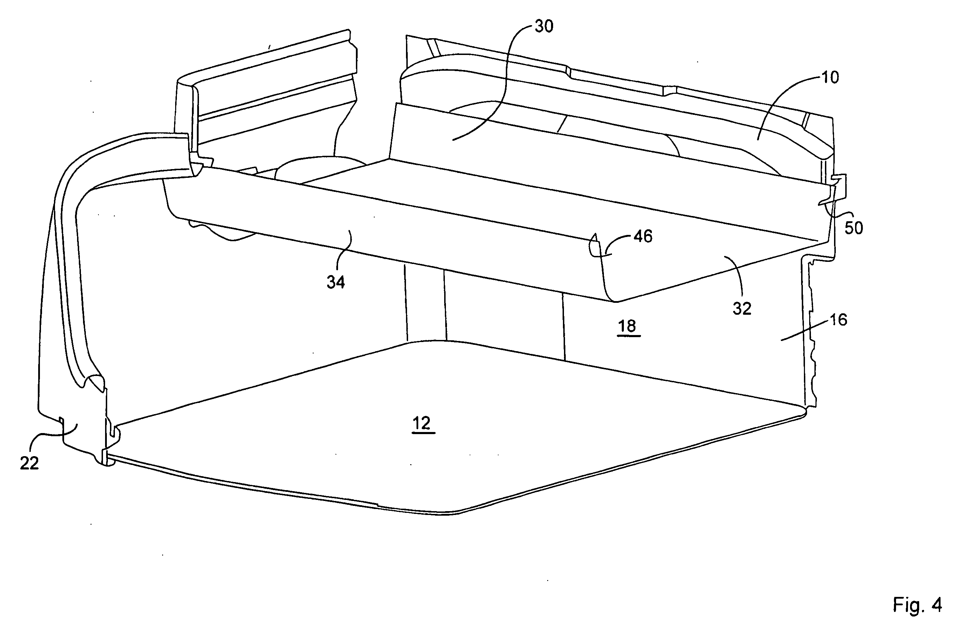

Gemäß den Figuren 1 und 4 weist ein Cabrioletfahrzeug eine Fahrzeugstruktur mit einer oben in einem Querträger 10 endenden und den im Heck des Fahrzeugs angeordneten Gepäckraum 12 von dem Fahrgastraum 14 trennenden Trennwand 16 auf, in der eine Durchladeöffnung 18 ausgebildet ist, durch die hindurch sperrige, im Gepäckraum 12 aufgenommene Gegenstände bis in den Fahrgastraum 14 hinein reichen können.

In einem Abstand hinter dem Querträger 10 weist die Fahrzeugstruktur einen weiteren Querträger 20 (in Fig. 4 nicht dargestellt) auf, an dem eine Gepäckraumklappe 22 (Fig. 4) und eine Verdeckklappe 24 (Fig. 1) schwenkbar gelagert sind.

In Fig. 1 stellt der Pfeil F die Vorwärtsrichtung des Fahrzeugs dar. Die Verdeckklappe 24 ist um eine Lagerachse A aufwärts schwenkbar.

Ein nicht dargestelltes Verdeck des Fahrzeugs, das ein Stoffverdeck oder ein Hartschalenverdeck sein kann, liegt mit seinem Hinterrand, der meist als Spannbügel ausgebildet ist, im geschlossenen Zustand auf der geschlossenen Verdeckklappe 24 (Stellung gemäß Fig. 1) auf. Das Verdeck ist insgesamt, im Allgemeinen, im Bereich des Querträgers 10 an der Fahrzeugstruktur über einen Gelenkmechanismus befestigt. Zum Öffnen des Verdecks wird ein hinterer Bereich des Verdecks zunächst hochgeklappt, so dass Anschließend die Verdeckklappe 24 in Uhrzeigerrichtung hochgeklappt werden kann und eine in den Gepäckraum 12 reichende Öffnung freigibt. Durch diese Öffnung hindurch wird das Verdeck dann insgesamt abgesenkt und in einem Verdeckablageraum 26 abgelegt. Anschließend wird die Verdeckklappe 24 in Gegenuhrzeigerrichtung zurückgeschwenkt, so dass sie den Gepäckraum 12 bzw. den Verdeckablageraum 26 nach oben verschließt.

Zur Abtrennung des Verdeckablageraums 26 von dem eigentlichen Gepäckraum 12 ist eine insgesamt mit 28 bezeichnete Trennvorrichtung vorgesehen, die sich quer über die Fahrzeugbreite erstreckt und ein vorderes Schwenkteil 30, ein Bodenteil 32 und eine hintere Schwenkklappe 34 aufweist.

Das Schwenkteil 30 und die Schwenkklappe 34 sind in sich steife Bauteile, beispielsweise gespritzte Kunststoffteile, wohingegen das Bodenteil 32 zumindest einen sich quer über die Fahrzeugbreite erstreckenden biegsamen Bereich aufweist und vorteilhafterweise insgesamt durch eine Folie, einen Gewebestoff oder ein sonstiges biegsames, dünnes, gegebenenfalls elastisches Material, beispielsweise auch durch einen Teppich, gebildet ist.

Das Schwenkteil 30 ist um eine Achse B in Richtung des Doppelpfeils schwenkbar unmittelbar am Querträger 10 oder mittels Schwenkzapfen beidseitig an der Fahrzeugstruktur angebracht. Gemäß Fig. 1 ist das Schwenkteil 30 aus einer im Wesentlichen senkrecht nach unten gerichteten Stellung, die einer Verdeckaufnahmestellung entspricht und in der das Schwenkteil 30 die Durchladeöffnung 18 teilweise überdeckt (Fig. 4) in Gegenuhrzeigerrichtung nach oben in eine etwa senkrechte Stellung bewegbar, die einer Gepäckaufnahmestellung entspricht und in der das Schwenkteil 30 bis knapp unterhalb der geschlossenen Verdeckklappe 24 reicht.

Während das Schwenkteil 30 beispielsweise als eine insgesamt ebene Klappe ausgebildet sein kann, kann die Schwenkklappe 34 z. B. in sich gebogen ausgebildet werden und zum Gepäckraum 12 hin konvex sein. In der Stellung gemäß Fig. 1 befindet sich die Schwenkklappe 34 in ihrer Verdeckaufnahmestellung, in der sie sich vom Querträger 20 aus zunächst senkrecht nach unten und dann waagrecht in Richtung zur Trennwand 16 erstreckt. Die Schwenkklappe 34 ist aus der Stellung gemäß Fig. 1 um eine Achse C in Uhrzeigerrichtung um etwa 90° schwenkbar, so dass sie in der verschwenkten Stellung etwa an der Kontur des Querträgers 20 anliegt und bis zur Verdeckklappe 24 reicht.

Das bevorzugt als Folie ausgebildete Bodenteil 32 ist an seinem in Fahrzeuglängsrichtung vorderen Rand am freien Rand des Schwenkteils 30 befestigt und an seinen rückwärtigen Rand am freien Rand der Schwenkklappe 34 befestigt. Die in Fahrzeuglängsrichtung gemessene Länge des Bodenteils 32 ist so, dass das Bodenteil 32 in der Verdeckaufnahmestellung gemäß Fig. 1 bzw. 4, in der der Verdeckablageraum 26 maximal ist und der Gepäckraum 12 durch den Verdeckablageraum 26 maximal verkleinert ist, in etwa gestreckt ist. In der in Fig. 2 dargestellten Gepäckaufnahmestellung der Trennvorrichtung 28, die bei geschlossenem Verdeck eingenommen wird, ist der Verdeckablageraum 26 minimal und im Wesentlichen nur in Folge des Durchhangs des Bodenteils 32 gebildet. Die gesamte Trennvorrichtung 28 kann derart ausgebildet sein, dass der Abstand der freien Enden des Schwenkteils und der Schwenkklappe in Gepäckaufnahmestellung etwa genauso groß ist wie in Verdeckaufnahmestellung (beispielsweise durch geringfügig weitere Schwenkbarkeit des Schwenkteils 30 in Gegenuhrzeigerrichtung gemäß Fig. 2, so dass der Verdeckablageraum 26 dann im Wesentlichen kein Volumen hat bzw. das Bodenteil 32 in sich straff ist. Auch bei durchhängendem Bodenteil 32 ist der Gepäckraum 12 nicht eingeschränkt, da das Bodenteil 32 von dem Gepäckraum 12 aufgenommenen Gepäckstücken nach oben gegen die Verdeckklappe 24 gedrängt werden kann. Ein Durchhängen des Bodenteils 32 kann auch dadurch vermieden werden, dass das Bodenteil 32 in Fahrzeuglängsrichtung elastisch dehnbar ist oder dass die das Bodenteil 32 bildende Folie durch Abwickeln von einer an einem der Klappenteile angebrachten Wickelwelle unter Spannung gehalten wird.

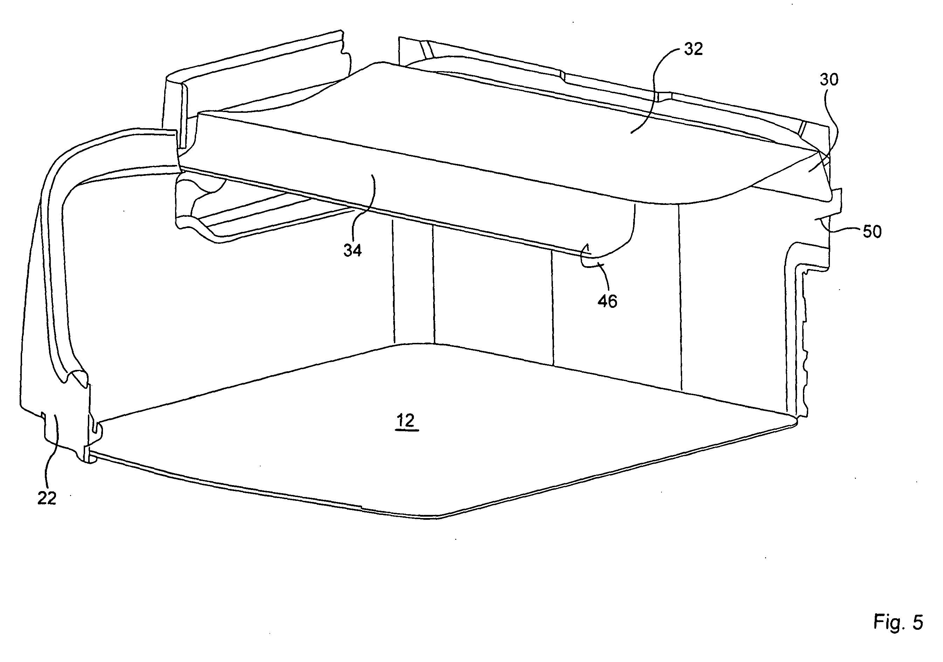

Wie insbesondere aus Fig. 5 ersichtlich, ist der Gepäckraum 12 bei in Gepäckaufnahmestellung befindlicher Trennvorrichtung 28 nicht eingeschränkt und die Durchladeöffnung 18 ist voll zugänglich.

Insbesondere das Schwenkteil 30 muss nicht zwingend ein flächiges Formteil sein, sondern kann lediglich durch einen Rahmen gebildet sein, an dem das Bodenteil 32 gehalten ist.

Bei geeigneter Anbringung kann auch die Schwenkklappe 34 als ebenes flächiges Formteil oder als Rahmen ausgebildet sein, an dem das Bodenteil 32 gehalten wird.

Im Folgenden wird eine Betätigungs- bzw. Antriebsvorrichtung 40 (Fig. 3) zum Verschwenken des Schwenkteils 30 und des Bodenteils 32 bzw. zum Bewegen der Trennvorrichtung 28 aus der Verdeckaufnahmestellung gemäß den Figuren 1 und 4 in die Gepäckaufnahmestellung gemäß den Figuren 2 und 5 erläutert.

Das Schwenkteil 30 und die Schwenkklappe 34 sind vorteilhafterweise mittels Zapfen (Ausschnitt der Fig. 2) seitlich in entsprechenden Lageraufnahmen gelagert, die an der Fahrzeugstruktur ausgebildet sind. Zumindest an je einer Fahrzeugseite ist konzentrisch mit den Zapfen eine starr mit dem Schwenkteil 30 bzw. Schwenkklappe 34 verbundene Umlenkscheibe 44 konzentrisch zum Zapfen 42 angeordnet. An der Umlenkscheibe 44 ist ein Ende eines Zugmittels 46, beispielsweise die Seele eines Bowdenzugs, befestigt, der um einen Umfangsbereich der Umlenkscheibe 44 umläuft.

Wie insbesondere aus dem Ausschnitt der Fig. 2 ersichtlich, ist die Anordnung derart, dass durch Ziehen am Zugmittel 46 die Schwenkklappe 34 in Uhrzeigerrichtung verschwenkt wird.

Fig. 3 zeigt zusätzlich zur Umlenkscheibe 44 eine Umlenkscheibe 48 die starr mit dem Schwenkteil 30 verbunden ist, und um die ebenfalls ein Zugmittel 50 umläuft, wobei das Schwenkteil 30 bei Zug am Zugmittel 50 in Gegenuhrzeigerrichtung verschwenkt wird.

Die beiden Zugmittel 46 und 50 sind über Umlenkrollen geführt und dann beispielsweise mit einer Zahnstange 54 verbunden, die mit dem Innengewinde eines Ritzels 56 kämmt, das von einem Elektromotor 58 drehangetrieben ist.

Die an den von der Umlenkscheibe 44 bzw. 48 abgewandten Seiten der Schwenkklappe 34 bzw. des Schwenkteils 30 angeordneten Lagerzapfen sind vorteilhafterweise ebenfalls mit Bauteilen, beispielsweise Anschlagscheiben versehen, so dass sich Torsionsfedern zwischen den Anschlagscheiben und der Fahrzeugstruktur abstützen und das Schwenkteil 30 bzw. die Schwenkklappe 34 in die Verdeckaufnahmestellung gemäß Fig. 1 vorspannt. Durch Zug auf die Zugmittel 46 bzw. 50 gelangt die Trennvorrichtung 28 somit aus der Verdeckaufnahmestellung gemäß Figuren 1 bzw. 4 in die Gepäckaufnahmestellung gemäß Fig. 2 und 5. Werden umgekehrt die Zugmittel entlastet, so gelangt die Trennvorrichtung aus der Gepäckaufnahmestellung in die Verdeckaufnahmestellung.

Es versteht sich, dass die Vorspannung und die Wirkrichtung der Zugmittel auch umgekehrt sein können. Die elektrische Betätigung der Verschwenkung hat den Vorteil, dass der Elektromotor 58 in eine Steuerfolge zum Öffnen und Schließen des Verdecks integriert werden kann, so dass die Vergrößerung bzw. Verkleinerung des Verdeckaufnahmeraums 26 synchronisiert mit der Öffnung bzw. dem Schließen des Verdecks erfolgt.

Anstelle eines gemeinsamen Elektromotors 58 können auch getrennte Elektromotoren zum Verschwenken des Schwenkteils 30 bzw. der Schwenkklappe 34 vorgesehen sein.

Bei der beschriebenen elastischen Vorspannung an jeweils einer Seite des Schwenkteils 30 bzw. der Schwenkklappe 34 und deren Betätigung an der jeweils anderen Seite ist ein gewisses Maß an Torsionssteifigkeit der genannten Bauteile erforderlich, dass dadurch vermindert werden kann, dass sich jeweils eine Welle über die gesamte Breite der Bauteile erstreckt. Anstelle des Elektromotors 58 kann auch ein Hydraulikzylinder verwendet werden.

Des weiteren ist es möglich, die Bowdenzüge bzw. Zugmittel 46 und 50 direkt mit einem Teil des Gelenkmechanismus zu verbinden, der das Verdeck beim Öffnen und Schließen führt. Die Verbindung erfolgt dann vorteilhafterweise so, dass bei elastischer Verspannung der Trennvorrichtung 28 in Verdeckaufnahmestellung die Bewegung der Trennvorrichtung 28 in die Gepäckaufnahmestellung unmittelbar durch das Schließen des Verdecks erfolgt, wohingegen die Bewegung der Trennvorrichtung 28 aus der Gepäckaufnahmestellung in die Verdeckaufnahmestellung unmittelbar durch das Öffnen des Verdecks erfolgt.

Alternativ können die Zugmittel 46 und 50 auch gemeinsam manuell betätigt werden.

Um die Bewegbarkeit der Trennvorrichtung aus der Gepäckaufnahmestellung in die Verdeckaufnahmestellung sicherzustellen, kann eine Sensoreinrichtung vorgesehen sein, die bei in Gepäckaufnahmestellung befindlicher Trennvorrichtung den Raum, beispielsweise durch Ultraschall abtastet, der von der Trennvorrichtung beim Bewegen in die Verdeckaufnahmestellung überstrichen wird, oder die erfasst, ob das Schwenkteil und die Schwenkklappe sich bis in ihre Endstellungen bewegen.

Die Erfindung ist in vielfältiger Weise abänderbar, solange der Grundgedanke realisiert ist, den Verdeckablageraum 26 durch mit Hilfe einer Betätigungs- bzw. Antriebsvorrichtung erfolgendes, vorteilhaft gleichzeitiges Verschwenken zweier Bauteile, die über ein flexibles Bodenteil verbunden sind, zwischen einem maximalen Volumen und einem minimalen Volumen hin und her zu verstellen.

### BEZUGSZEICHENLISTE

- 10: Querträger
- 12: Gepäckraum
- 14: Fahrgastraum
- 16: Trennwand
- 18: Durchladeöffnung
- 20: Querträger
- 22: Gepäckraumklappe
- 24: Verdeckklappe
- 26: Verdeckablageraum
- 28: Trennvorrichtung
- 30: Schwenkteil
- 32: Bodenteil
- 34: Schwenkklappe
- 40: Antriebsvorrichtung
- 42: Zapfen
- 44: Umlenkscheibe
- 46: Zugmittel
- 48: Umlenkscheibe
- 50: Zugmittel
- 52: Umlenkrollen
- 54: Zahnstange
- 56: Ritzel
- 58: Elektromotor

## Patentansprüche

1. Cabriolet-Fahrzeug mit einem in einem Verdeckablageraum (26) ablegbaren Verdeck, welcher Verdeckablageraum (26) an den Fahrgastraum (14) nach hinten angrenzend durch eine Trennvorrichtung (28) von einem vorderen, oberen Bereich des Gepäckraums (12) des Fahrzeugs getrennt ist, wobei die Trennvorrichtung (28) ein vorderes, in sich im wesentlichen starres Schwenkteil (30), das mit der Fahrzeugstruktur um eine quer zur Fahrzeuglängsrichtung verlaufende Achse schwenkbar verbunden ist, eine hintere, in sich im wesentlichen starre Schwenkklappe (34), die mit der Fahrzeugstruktur um eine quer zur Fahrzeuglängsrichtung verlaufende Achse schwenkbar verbunden ist, und ein mit dem Schwenkteil (30) und der Schwenkklappe (34) verbundenes Bodenteil (32) aus zumindest teilweise flexiblem Material aufweist und durch Verschwenken des Schwenkteils (30) und der Schwenkklappe (34) in eine Verdeckaufnahmestellung, in der das Volumen des Verdeckaufnahmeraums maximal ist, und eine Gepäckaufnahmestellung, in der das Gepäckraumvolumen maximal ist, bringbar ist,
**gekennzeichnet durch**
eine Antriebsvorrichtung (40), mit der das Schwenkteil (30) und die Schwenklappe (34) zwischen der Verdeckaufnahmestellung und der Gepäckaufnahmestellung verschwenkbar sind, welche Antriebsvorrichtung ein zumindest an einer Fahrzeugseite angeordnetes Zugmittel (50) zum Verschwenken des Schwenkteils (30) und ein zumindest an einer Fahrzeugseite angeordnetes Zugmittel (46) zum Verschwenken der Schwenkklappe (34) aufweist, wobei das Schwenkteil (30) und die Schwenkklappe (34) elastisch in die Verdeckaufnahmestellung oder die Gepäckaufnahmestellung vorgespannt sind und von der Antriebsvorrichtung (40) in die Gepäckaufnahmestellung oder die Verdeckaufnahmestellung schwenkbar sind.

2. Cabriolet-Fahrzeug nach Anspruch 1,
**dadurch gekennzeichnet,**
**dass** die Zugelemente (46, 50) um ein Umlenkbauteil (48, 44) des Schwenkteils (30) bzw. der Schwenkklappe (34) herumgeführt sind.

3. Cabriolet-Fahrzeug nach Anspruch 2,
**dadurch gekennzeichnet,**
**dass** die Zugelemente mit wenigstens einem Teil eines Verdeckklappmechanismus verbunden sind und durch dessen Bewegung betätigt werden.

4. Cabriolet-Fahrzeug nach einem der Ansprüche 1 bis 3,
**dadurch gekennzeichnet,**
**dass** die Antriebsvorrichtung (40) wenigstens einen elektrisch angesteuerten Aktor (58) enthält.

5. Cabriolet-Fahrzeug nach einem der Ansprüche 1 bis 4,
**dadurch gekennzeichnet,**
**dass** das Schwenkteil (30) an der Fahrzeugstruktur derart schwenkbar angebracht ist, dass es in der Verdeckaufnahmestellung eine in einer den Gepäckraum (12) zum Fahrgastraum (14) abtrennenden Trennwand (16) ausgebildete Durchladeöffnung (18) teilweise überdeckt und in der Gepäckaufnahmestellung nach oben derart verschwenkt ist, dass sich der an ihm befestigte Randbereich des Bodenteils (32) unmittelbar unter einer normalerweise geschlossenen Verdeckklappe (24) befindet.

6. Cabriolet-Fahrzeug nach Anspruch 5,
**dadurch gekennzeichnet,**
**dass** das Schwenkteil (30) als eine im wesentlichen ebene Klappe ausgebildet ist, an derem freien, sich quer zur Fahrzeuglängsrichtung erstreckenden Rand das Bodenteil (32) befestigt ist.

7. Cabriolet-Fahrzeug nach einem der Ansprüche 1 bis 6,
**dadurch gekennzeichnet,**
**dass** die Schwenkklappe (34) in ihrer abwärts verschwenkten Verdeckaufnahmestellung ausgehend von einem an der Oberseite des Gepäckraums (12) angeordneten Querträger (20) der Fahrzeugstruktur zunächst abwärts verläuft und dann nach vorne zu einem etwa waagerecht verlaufenden Bereich umgebogen ist, an deren freiem Rand das Bodenteil (32) befestigt ist.

8. Cabriolet-Fahrzeug nach Anspruch 7,
**dadurch gekennzeichnet,**
**dass** sich der freie Rand der Schwenkklappe (34) in deren Gepäckaufnahmestellung unmittelbar unter einer normalerweise geschlossenen Verdeckklappe (24) befindet.

9. Cabriolet-Fahrzeug nach einem der Ansprüche 1 bis 8, **dadurch gekennzeichnet,**
**dass** das Bodenteil (32) durch eine in Fahrzeuglängsrichtung elastische Folie gebildet ist.

10. Cabriolet-Fahrzeug nach einem der Ansprüche 1 bis 9,
**dadurch gekennzeichnet,**
**dass** der Abstand zwischen den Bereichen des Schwenkteils (30) und der Schwenkklappe (34), an denen das Bodenteil (32) befestigt ist, in der Verdeckaufnahmestellung und in der Gepäckaufnahmestellung etwa gleich ist.

## Claims

1. A cabriolet vehicle with a top which is able to be stored in a top storage compartment (26), which top storage compartment (26), adjoining the passenger compartment (14) toward the rear is separated by a separating device (28) from a front, upper region of the luggage compartment (12) of the vehicle, wherein the separating device (28) has a front pivoting part (30), substantially rigid in itself, which is connected pivotably with the vehicle structure about an axis running transversely to the longitudinal direction of the vehicle, a rear pivoting flap (34), substantially rigid in itself, which is connected pivotably with the vehicle structure about an axis running transversely to the longitudinal direction of the vehicle, and a base part (32), connected with the pivoting part (30) and the pivoting flap (34), of at least partially flexible material, and is able to be brought into a top accommodating position by pivoting the pivoting part (30) and the pivoting flap (34), in which the volume of the top accommodating space is maximum, and a luggage accommodating position, in which the luggage compartment volume is maximum, **characterized by**
a drive device (40), by which the pivoting part (30) and the pivoting flap (34) are able to be pivoted between the top accommodating position and the luggage accommodating position, which drive device has a traction means (50), arranged at least on one side of the vehicle, for pivoting the pivoting part (30), and a traction means (46), arranged on at least one side of the vehicle, for pivoting the pivoting flap (34), wherein the pivoting part (30) and the pivoting flap (34) are prestressed elastically into the top accommodating position or the luggage accommodating position and are pivotable by the drive device (40) into the luggage accommodating position or the top accommodating position.

2. The cabriolet vehicle according to Claim 1,
**characterized in that**
the traction elements (46, 50) are guided around a deflection component (48, 44) of the pivoting part (30) or respectively of the pivoting flap (34).

3. The cabriolet vehicle according to Claim 2,
**characterized in that**
the traction elements are connected with at least a part of a top folding mechanism and are actuated by its movement.

4. The cabriolet vehicle according to one of Claims 1 to 3,
**characterized in that**
the drive device (40) contains at least one electrically controlled actuator (58).

5. The cabriolet vehicle according to one of Claims 1 to 4,
**characterized in that**
the pivoting part (30) is mounted pivotably on the vehicle structure such that in the top accommodating position it partially overlaps a loading opening (18) formed in a partition wall (16) separating the luggage compartment (12) from the passenger compartment (14), and in the luggage accommodating position it is pivoted upwards such that the edge region of the base part (32), fastened thereon, is situated immediately beneath a normally closed top flap (24).

6. The cabriolet vehicle according to Claim 5,
**characterized in that**
the pivoting part (30) is constructed as a substantially flat flap, on the free edge of which, extending transversely to the longitudinal direction of the vehicle, the base part (32) is fastened.

7. The cabriolet vehicle according to one of Claims 1 to 6,
**characterized in that**
the pivoting flap (34), in its downwardly pivoted top accommodating position, firstly runs downwards starting from a crossmember (20) of the vehicle structure, arranged on the upper side of the luggage compartment (12), and then is bent towards the front to a region running approximately horizontally, at the free edge of which the base part (32) is fastened.

8. The cabriolet vehicle according to Claim 7,
**characterized in that**
the free edge of the pivoting flap (34) in its luggage accommodating position is situated immediately beneath a normally closed top flap (24).

9. The cabriolet vehicle according to one of Claims 1 to 8, **characterized in that**
the base part (32) is formed by a sheet which is elastic in the longitudinal direction of the vehicle.

10. The cabriolet vehicle according to one of Claims 1 to 9,
**characterized in that**
the distance between the regions of the pivoting part (30) and the pivoting flap (34), on which the base part (32) is fastened, is approximately equal in the top accommodating position and in the luggage accommodating position.

## Revendications

1. Véhicule cabriolet équipé d'une capote pouvant être déposée dans un espace de dépose de capote (26), lequel espace de dépose de capote (26) est contigu à l'habitacle (14) vers l'arrière et est séparé par un dispositif de séparation (28) d'une zone avant supérieure du coffre à bagages (12) du véhicule, le dispositif de séparation (28) présentant une partie basculante (30) avant, pour l'essentiel rigide en soi, qui est reliée à la structure du véhicule de façon à pouvoir basculer autour d'un axe disposé transversalement au sens longitudinal de véhicule, un volet basculant (34) arrière, pour l'essentiel rigide en soi, qui est relié à la structure du véhicule de façon à pouvoir basculer autour d'un axe agencé transversalement à la direction longitudinale du véhicule, et une partie de fond (32) reliée à la partie basculante (30) et au volet basculant (34) et à base de matériau au moins partiellement flexible, et pouvant être amené par basculement de la partie basculante (30) et du volet basculant (34) dans une position de réception de capote, dans laquelle le volume de l'espace de réception de capote est maximum, et une position de réception de bagage, dans laquelle le volume de coffre à bagages est maximum, **caractérisé par**
un dispositif d'entraînement (40), avec lequel la partie basculante (30) et le volet basculant (34) peuvent basculer entre la position de réception de capote et la position de réception de bagages, lequel dispositif d'entraînement présente un moyen de traction (50) disposé au moins sur un côté de véhicule pour le basculement de la partie basculante (30) et un moyen de traction (46), disposé au moins sur un côté de véhicule, pour le basculement du volet basculant (34), la partie basculante (30) et le volet basculant (34) étant pré-tendus de façon élastique dans la position de réception de capote ou la position de réception de bagages et pouvant être basculés par le dispositif d'entraînement (40) dans la position de réception de bagages ou la position de réception de capote.

2. Véhicule cabriolet selon la revendication 1,
**caractérisé en ce que**
les éléments de traction (46, 50) sont guidés autour d'un composant de déviation (48, 44) de la partie basculante (30) ou du volet basculant (34).

3. Véhicule cabriolet selon la revendication 2,
**caractérisé en ce que**
les éléments de traction sont reliés à au moins une partie d'un mécanisme de rabattement de capote et sont actionnés par son mouvement.

4. Véhicule cabriolet selon l'une quelconque des revendications 1 à 3,
**caractérisé en ce que**
le dispositif d'entraînement (40) contient au moins un actionneur (58) commandé électriquement.

5. Véhicule cabriolet selon l'une quelconque des revendications 1 à 4,
**caractérisé en ce que**
la partie basculante (30) est placée sur la structure du véhicule de manière basculante de telle sorte que, dans la position de réception de capote, elle recouvre partiellement une ouverture de chargement (18) conçue dans une paroi de séparation (16) séparant le coffre à bagages (12) de l'habitacle (14) et, dans la position de réception de bagages, est basculée vers le haut, de telle sorte que la zone de bordure, fixée sur la partie basculante, de la partie de fond (32) se trouve directement sous un volet de capote (24) normalement fermé.

6. Véhicule cabriolet selon la revendication 5,
**caractérisé en ce que**
la partie basculante (30) est conçue sous forme d'un volet sensiblement plan, sur l'extrémité libre, s'étendant transversalement à la direction longitudinale du véhicule, duquel la partie de fond (32) est fixée.

7. Véhicule cabriolet selon l'une quelconque des revendications 1 à 6,
**caractérisé en ce que**
le volet basculant (34) est agencé, dans sa position de réception de capote basculée vers le bas, à partir d'une traverse (20) disposée sur le côté supérieur du coffre à bagages (12), de la structure de véhicule d'abord vers le bas et est replié ensuite vers l'avant vers une zone agencée à peu près horizontalement, sur la zone libre duquel la partie de fond (32) est fixée.

8. Véhicule cabriolet selon la revendication 7,
**caractérisé en ce que**
le bord libre du volet basculant (34) se trouve, dans une position de réception de bagages, directement sous un volet de capote (24) normalement fermé.

9. Véhicule cabriolet selon l'une quelconque des revendications 1 à 8,
**caractérisé en ce que**
la partie de fond (32) est formée par un film élastique dans le sens longitudinal du véhicule.

10. Véhicule cabriolet selon l'une quelconque des revendications 1 à 9,
**caractérisé en ce que**
la distance entre les zones de la partie basculante (30) et le volet basculant (34), sur lesquelles la partie de fond (32) est fixée, est à peu près identique dans la position de réception de capote et dans la position de réception de bagages.
